# EUROPÄISCHE PATENTSCHRIFT

(11) **EP 1 558 856 B1**
(45) Veröffentlichungstag und Bekanntmachung des Hinweises auf die Patenterteilung: **03.05.2006**
(21) Anmeldenummer: 03773691.5
(22) Anmeldetag: 31.10.2003
(51) Int. Cl.: F16D 65/14, B60T 13/68, B60T 17/08

(54) **BREMSEINRICHTUNG MIT EINEM DRUCKMITTELBETÄTIGTEN AKTUATOR**
BRAKE DEVICE WITH AN ACTUATOR OPERATED BY A PRESSURE MEDIUM
SYSTEME DE FREINAGE COMPRENANT UN ACTIONNEUR COMMANDE PAR UN AGENT DE PRESSION

(30) Priorität: 31.10.2002 DE 10250821
(43) Veröffentlichungstag der Anmeldung: 03.08.2005
(73) Patentinhaber: KNORR-BREMSE Systeme für Schienenfahrzeuge GmbH, 80809 München (DE)
(72) Erfinder: HUBER, Jürgen, 81549 München (DE); RASEL, Thomas, 81547 München (DE); KNOSS, Rainer, 80637 München (DE)
(86) Internationale Anmeldenummer: PCT/EP2003/012175
(87) Internationale Veröffentlichungsnummer: WO 2004/040160

(56) Entgegenhaltungen:
- EP-A- 1 086 867
- CA-A- 985 349
- DE-A- 19 962 807
- DE-U- 29 708 124
- US-A- 4 575 159

## Beschreibung

### Stand der Technik

Die Erfindung betrifft eine Bremseinrichtung mit einem druckmittelbetätigten Aktuator zum Zuspannen und Lösen einer Fahrzeugbremse, insbesondere einer Schienenfahrzeugbremse gemäß Anspruch 1.

Aus dem Stand der Technik sind Bremseinrichtungen mit druckmittelbetätigten Aktuatoren bekannt, bei welchen die Bremse durch Einsteuern eines Druckmittels in den Bremszylinder, beispielsweise Druckluft, zugespannt wird. Diese Art von aktivem Bremszylinder wird beispielsweise für die Betriebsbremse von Schienenfahrzeugen eingesetzt. Weiterhin sind druckmittelbetätigte Aktuatoren mit passiven Bremszylindern bekannt, bei welchen das Zuspannen der Bremse durch Federkraft erfolgt und die Bremse durch Einsteuern von Druckmittel gelöst wird. Solche Bremsen sind folglich trotz eines Druckmittelverlusts in Zuspannrichtung funktionsfähig und werden beispielsweise für Park- oder Notbremseinrichtungen von Schienenfahrzeugen verwendet.

Bei der gattungsgemäßen Bremseinrichtung gemäß der EP-A-1 086 867 wird eine von zwei durch einen Kolben getrennten Druckkammern zum Zuspannen der Bremse belüftet. Beim Bremslösen unterstützt die Druckluft in der belüfteten Druckkammer den Lösevorgang dadurch, dass sie über ein Stellglied in die andere Druckkammer geleitet wird, welche ständig über eine nicht steuerbare Ableitung mit der Atmosphäre in Verbindung steht. Demzufolge bildet sich in der anderen Druckkammer ein Staudruck aus, welcher ein Lösen der Bremse begünstigt. Durch das Überströmen der Druckluft wird diese mehrfach genutzt und muss nicht mehr von der Druckmittelquelle erzeugt werden. Außerdem kann das Bremsmoment im Falle eines Einbruchs der Raddrehzahl schnell abgesenkt werden.

Die US-A-4 575 159 beschreibt ein Schienenfahrzeugbremssystem mit einem Zylinder-Kolbentrieb, bei welchem der Kolben in Bremszuspannstellung federbelastet ist.

Beide Seiten des Kolbens sind durch eine Steuerungseinrichtung druckmittelbeaufschlagbar, welche eine Druckdifferenz zwischen den Kolbenflächen für die Betriebsbremse nutzt.

Der vorliegenden Erfindung liegt demgegenüber die Aufgabe zugrunde, eine Bremseinrichtung der eingangs erwähnten Art derart weiter zu entwickeln, dass sie einen noch geringeren Druckmittelverbrauch sowie eine noch schnellere Reaktion auf Brems- bzw. Verzögerungsanforderungen aufweist.

Erfindungsgemäß wird diese Aufgabe durch die Merkmale von Patentanspruch 1 gelöst.

### Vorteile der Erfindung

Anstatt zum Druckabbau in den Druckkammern Druckmittel in die Umgebung abzulassen, wird ein Teil des in der jeweils druckbeaufschlagten Druckkammer vorhandenen Druckmittels durch Öffnen des Überströmventils in die andere Druckkammer geleitet und dort zum Druckaufbau genutzt. Folglich wird Druckmittel mehrfach genutzt und muss nicht mehr von der Druckmittelquelle erzeugt werden. Dies resultiert in einem geringeren Druckmittelverbrauch des druckmittelbetätigten Aktuators und folglich in einer kleiner dimensionierten Druckmittelversorgung, insbesondere in kleineren Vorratsluftbehältern. Alternativ kann bei unverändert dimensionierter Druckmittelversorgung der Bremszylinder verkleinert werden, um eine vorgegebene Brems- bzw. Lösekraft zu erzeugen, weil ein Teil der Brems- bzw. Lösekraft bereits durch die von einer Druckkammer in die andere Druckkammer überströmende Druckmittelmenge erzeugt wird. Dies ist besonders beim Einsatz des Aktuators in niederflurigen Nahverkehrsfahrzeugen von Vorteil, bei welchen für die Bremszylinder nur ein begrenzter Bauraum zur Verfügung steht. Weiterhin können die Ventilquerschnitte der Be- und Entlüftungsventile reduziert werden, weil sie nur noch von einem Teil des zum Zuspannen bzw. zum Lösen der Bremse erforderlichen Druckmittels durchströmt werden.

Da das Überströmventil nun auch während der Übergangsphase zwischen der Lösestellung und der Zuspannstellung wirkt, unterstützt das überströmende Druckmittel den Zuspannvorgang, was in einer schnelleren Reaktion auf eine Bremsanforderung resultiert. Gegenüber der EP-A-1 086 867, welche überströmendes Druckmittel nur während der Bremslösephase nutzt, wird solches nicht sofort abgeleitet, sondern verbleibt solange in der Druckkammer, bis sich ein Druckausgleich einstellt, so dass die in dem Druckmittel vorhandene Druckenergie optimal genutzt wird. Die Be- und Entlüftungsventile sorgen für eine weitere Steigerung bzw. Absenkung des durch das Überströmen eingestellten Druckniveaus.

Durch die in den Unteransprüchen aufgeführten Maßnahmen sind vorteilhafte Weiterbildungen und Verbesserungen der im Patentanspruch 1 angegebenen Erfindung möglich.

Gemäß einer besonders bevorzugten Ausführungsform der Erfindung ist der Stellkolben in Richtung Zuspannstellung federbelastet. Dann liegt ein bereits eingangs beschriebener passiver Bremszylinder vor. Vorzugsweise ist das Druckausgleichventil solange geöffnet, dass ein Bruchteil einer maximal erreichbaren Bremskraft oder Lösekraft erzeugt wird. Die Maximalkraft wird dann durch zusätzliches Be- und Entlüften der jeweiligen Druckkammern erzielt.

In zu bevorzugender Weise sind Be- und Entlüftungsventile zum Be- und Entlüften der beiden Druckkammern vorgesehen, welche während der Öffnungszeit des Überströmventils geschlossen sind, wobei ein über den Druckausgleich in den beiden Druckkammern hinausgehender Druckaufbau oder Druckabbau durch Öffnen oder Schließen der Be- und Entlüftungsventile erfolgt.

### Zeichnungen

Ein Ausführungsbeispiel der Erfindung ist in den Zeichnungen dargestellt und in der nachfolgenden Beschreibung näher erläutert. In den Zeichnungen zeigt:
- Fig. 1: eine schematische Darstellung eines Aktuators einer Schienenfahrzeugbremse gemäß einer bevorzugten Ausführungsform der Erfindung zu Beginn des Einbremsens;
- Fig.2: den Aktuator von Fig. 1 in fortgeschrittener Einbremsphase;
- Fig.3: den Aktuator von Fig. 1 zu Beginn einer Lösephase;
- Fig.4: den Aktuator von Fig. 1 in fortgeschrittener Lösephase;

### Beschreibung des Ausführungsbeispiels

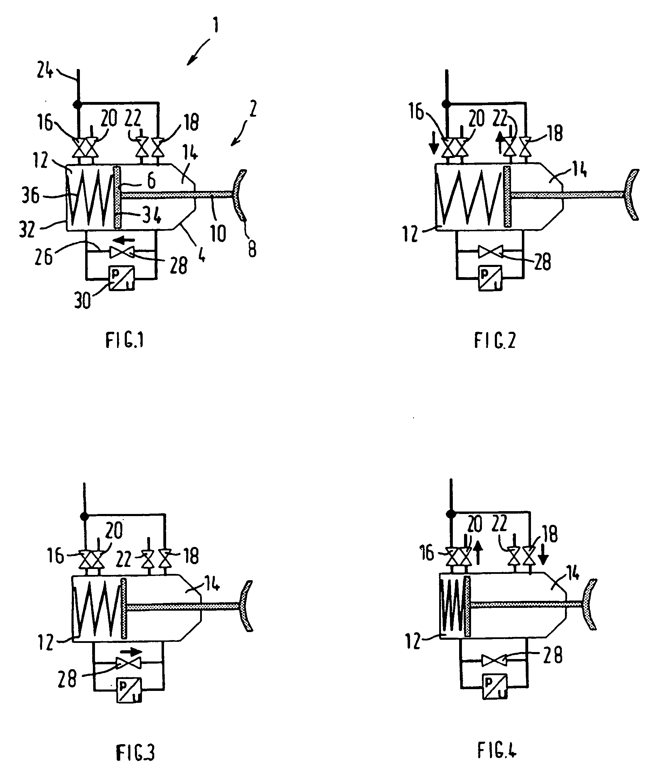

Der in Fig.1 insgesamt mit 1 bezeichnete Aktuator ist ein Teil einer Bremseinrichtung eines Schienenfahrzeugs und dient gemäß einer bevorzugten Ausführungsform zur Betätigung einer Klotzbremse 2, welche eine mit einem innerhalb eines Bremszylinders 4 linear beweglichen Stellkolben 6 gekoppelten Bremsklotz 8 beinhaltet, der mit einer aus Maßstabsgründen nicht dargestellten Bremsfläche eines Rades des Schienenfahrzeugs zusammenwirkt. Vorzugsweise ist der Bremsklotz 8 an einer Kolbenstange 10 des Stellkolbens 6 festgelegt, jedoch kann dem Stellkolben 6 und dem Bremsklotz 8 auch ein Bremsgestänge in bekannter Weise zwischengeordnet sein. Anstatt einer Klotzbremse 2 kann auch eine Scheibenbremse durch den Aktuator 1 betätigt werden.

Der Stellkolben 6 begrenzt mit seinen beiden voneinander abgewandten Kolbenseiten Druckkammern, von denen die eine Druckkammer 12 die Klotzbremse 2 in Zuspannstellung und die andere Druckkammer 14 sie in Lösestellung beaufschlagt Die beiden Druckkammern 12, 14 werden je durch ein Belüftungsventil 16, 18 und ein Entlüftungsventil 20, 22 be- bzw. entlüftet, wobei als Druckmittel vorzugsweise Druckluft einer Druckluftquelle zum Einsatz kommt. Vorzugsweise sind beide Belüftungsventile 16, 18 eingangsseitig mit einer Druckmittelleitung 24 verbunden, ausgangsseitig münden sie in die jeweils zugeordnete Druckkammer 12, 14. Die beiden Entlüftungsventile 20, 22 sind eingangsseitig mit der ihnen jeweils zugeordneten Druckkammer 12,14 und ausgangsseitig mit der Umgebung verbunden. Weiterhin sind beide Druckkammern 12, 14 über eine Druckmittelleitung 26 mit einem Überströmventil 28 miteinander verbindbar, welches je nach Schaltzustand die Verbindung herstellt oder sperrt. Die Druckdifferenz zwischen den beiden Druckkammern 12, 14 wird durch einen Relativ-Drucksensor 30 gemessen, welcher an den beiden Eingängen des Überströmventils 28 angeschlossen ist.

Der Stellkolben 6 ist mittels eines vorzugsweise innerhalb des Bremszylinders 4 angeordneten und sich einerseits am Bremszylinderboden 32 und andererseits an einer vom Bremsklotz 8 weg weisenden Kolbenfläche 34 des Stellkolbens 4 abstützenden Federelements in Form einer Schraubenfeder 36 in Richtung Zuspannstellung federbelastet. Die Schraubenfeder 36 ist folglich in der den Stellkolben 6 in Zuspannstellung beaufschlagenden einen Druckkammer 12 aufgenommen. Die Belüftungsventile 16, 18, die Entlüftungsventile 20, 22 und das Überströmventil 28 werden von einer aus Maßstabsgründen in den Fig.1 bis Fig.4 nicht gezeigten Steuereinrichtung angesteuert, welche sie wie folgt schaltet:

Ausgehend von einer Lösestellung der Klotzbremse 2, in welcher die den Stellkolben 6 gegen die Federkraft der Schraubenfeder 36 in Lösestellung beaufschlagende andere Druckkammer 14 maximal belüftet und die eine Druckkammer 12 maximal entlüftet ist, bleiben auf ein Bremsanforderungssignal hin zu Beginn einer Übergangsphase zwischen der Lösestellung und der Zuspannstellung die Belüftungsventile 16, 18 und die Entlüftungsventile 20, 22 geschlossen, jedoch wird und das Überströmventil 28 geöffnet. Diese Situation ist in Fig.1 dargestellt, wobei der Pfeil die Strömungsrichtung der Druckluft veranschaulicht. Infolgedessen strömt die unter höherem Druck stehende Druckluft aus der anderen Druckkammer 14 in die eine Druckkammer 12. Vorzugsweise bleibt das

Überströmventil 28 solange geöffnet, bis im wesentlichen Druckausgleich zwischen den beiden Druckkammern 12, 14 herrscht, was von dem Relativ-Drucksensor 30 detektiert wird. Alternativ kann das Überströmventil 28 auch bereits vor Erreichen des Druckausgleichs geschlossen werden. Unter der Wirkung der Schraubenfeder 36 und des in der einen Druckkammer 12 erhöhten Drucks bewegt sich der Stellkolben 6 in Richtung Zuspannstellung und baut eine Bremskraft auf, welche einem Bruchteil einer maximal erreichbaren Bremskraft entspricht, vorzugsweise etwa 50% der maximal erreichbaren Bremskraft. Nach erfolgtem Druckausgleich schließt das Überströmventil 28.

Zum Aufbau einer größeren Bremskraft, beispielsweise der maximalen Bremskraft wird das Belüftungsventil 16 der einen Druckkammer 12 geöffnet und externe Druckluft der Druckluftquelle eingespeist. Gleichzeitig wird das Entlüftungsventil 22 der anderen Druckkammer 14 geöffnet, wie aus Fig.2 hervorgeht. Folglich steigt der Druck in der einen Druckkammer 12 weiter an, während der Druck in der anderen Druckkammer 14 weiter sinkt

Ausgehend von der Zuspannstellung mit maximaler Bremskraft wird zu Beginn einer Übergangsphase zwischen der Zuspannstellung und der Lösestellung bei geschlossenen Belüftungs- und Entlüftungsventilen 16, 18, 20, 22 wiederum das Überströmventil 28 geöffnet, um durch Überströmen von Druckluft aus der einen Druckkammer 12 in die andere Druckkammer 14 vorzugsweise einen Druckausgleich herbeizuführen, wie der Pfeil in Fig.3 veranschaulicht. Hierbei sinkt die am Bremsklotz 8 wirkende Bremskraft auf beispielsweise 50 % der maximal erreichbaren Bremskraft.

Zum weiteren Abbau der Bremskraft und zum vollständigen Lösen der Klotzbremse 2 wird das der einen Druckkammer 12 zugeordnete Entlüftungsventil 20 geöffnet und über das ebenfalls geöffnete Belüftungsventil 18 der anderen Druckkammer 14 externe Druckluft in die andere Druckkammer 14 eingespeist. Diese Situation zeigt Fig.4.

Zusammenfassend ist folglich das Überströmventil 28 zumindest während eines Teils der Übergangsphase zwischen der Lösestellung und der Zuspannstellung und/oder zwischen der Zuspannstellung und der Lösestellung geöffnet und ansonsten geschlossen.

### Bezugszahlenliste

- 1: Aktuator
- 2: Klotzbremse
- 4: Bremszylinder
- 6: Stellkolben
- 8: Bremsklotz
- 10: Kolbenstange
- 12: Druckkammer
- 14: Druckkammer
- 16: Belüftungsventil
- 18: Belüftungsventil
- 20: Entlüftungsventil
- 22: Entlüftungsventil
- 24: Druckmittelleitung
- 26: Druckmittelleitung
- 28: Überströmventil
- 30: Drucksensor
- 32: Bremszylinderboden
- 34: Kolbenfläche
- 36: Schraubenfeder

## Patentansprüche

1. Bremseinrichtung mit einem druckmittelbetätigten Aktuator (1) zum Zuspannen und Lösen einer Fahrzeugbremse (2), insbesondere einer Schienenfahrzeugbremse, beinhaltend einen innerhalb eines Bremszylinders (4) verschieblichen Stellkolben (6), der mit voneinander abgewandten Kolbenseiten Druckkammern (12, 14) begrenzt, von denen die eine Druckkammer (12) die Fahrzeugbremse (2) in Zuspannstellung und die andere Druckkammer (14) die Fahrzeugbremse (2) in Lösestellung beaufschlagt, wobei die beiden Druckkammern (12, 14) durch eine Leitung (26) mit einem Überströmventil (28) miteinander verbunden sind, welches zumindest während eines Teils einer Übergangsphase zwischen der Zuspannstellung und der Lösestellung geöffnet und ansonsten geschlossen ist, **dadurch gekennzeichnet, dass** darüber hinaus das Überströmventil (28) zumindest während eines Teils einer Übergangsphase zwischen der Lösestellung und der Zuspannstellung geöffnet und ansonsten geschlossen ist, wobei das Überströmventil (28) solange geöffnet ist, bis im wesentlichen Druckausgleich zwischen den beiden Druckkammern (12, 14) herrscht und wobei Be- und Entlüftungsventile (16, 18, 20, 22) zum Be- und Entlüften der beiden Druckkammern (12, 14) vorgesehen sind, welche während der Öffnungszeit des Überströmventils (28) geschlossen sind und wobei ein über den Druckausgleich in den beiden Druckkammern (12, 14) hinausgehender Druckaufbau oder Druckabbau durch Öffnen oder Schließen der Be- und Entlüftungsventile (16, 18, 20,22) erfolgt.

2. Bremseinrichtung nach Anspruch 1, **dadurch gekennzeichnet, dass** der Stellkolben (6) in Richtung Zuspannstellung federbelastet ist.

3. Bremseinrichtung nach Anspruch 1 oder 2, **dadurch gekennzeichnet, dass** das Überströmventil (28) solange geöffnet ist, bis ein Bruchteil einer maximal erreichbaren Bremskraft oder Lösekraft erzeugt wird.

## Claims

1. Brake mechanism with an actuator (1) actuated by a pressure medium for applying and releasing a vehicle brake (2), in particular a railway vehicle brake, comprising a displacement piston (6) that can move within a brake cylinder (4) and which delimits pressure chambers (12, 14) with its piston faces on opposite sides, of which a first pressure chamber (12) actuates the vehicle brake (2) to the applied position and the other pressure chamber (14) restores the vehicle brake (2) to the release position, the two pressure chambers (12, 14) being connected to one another by a line (26) incorporating a bypass valve (28) which is open during at least part of a transition phase between the brake application and the brake release positions and is otherwise closed, **characterised in that** in addition the bypass valve (28) is open during at least part of a transition phase between the release position and the braking position and is otherwise closed, the bypass valve (28) remaining open until the pressure in the two pressure chambers (12, 14) has been substantially equalised, and pressurising and venting valves (16, 18, 20, 22) are provided for pressurising and venting the two pressure chambers (12, 14), these valves being closed during the time when the bypass valve (28) is open, and after pressure equalisation between the two pressure chambers (12, 14) has taken place the pressures therein are increased or reduced further by opening or closing the pressurising or venting valves (16, 18, 20, 22) respectively.

2. Brake mechanism according to Claim 1, **characterised in that** the displacement piston (6) is spring loaded in the brake application direction.

3. Brake mechanism according to Claims 1 or 2, **characterised in that** the bypass valve (28) is open until some fraction of a maximum attainable braking or release force has been produced.

## Revendications

1. Dispositif de freinage ayant un actionneur (1) actionné par un fluide sous pression pour serrer et desserrer un frein (2) de véhicule automobile, notamment un frein de véhicule ferroviaire, comprenant un piston (6) de réglage qui coulisse dans un cylindre (4) de frein et qui délimite par des faces de piston, éloignées l'une de l'autre, des chambres (12, 14) sous pression, dont l'une (12) alimente le frein (2) de véhicule automobile en la position de serrage et l'autre (14) alimente le frein (2) de véhicule automobile en la position de desserrage, les deux chambres (12, 14) sous pression communiquant entre elles par un conduit (26) ayant une vanne (28) de décharge qui est ouverte au moins pendant une partie d'une phase de transition entre la position de serrage et la position de desserrage et sinon est fermée, **caractérisé en ce que**, en outre, la vanne (28) de décharge est ouverte au moins pendant une partie d'une phase de transition entre la position de desserrage et la position de serrage et sinon est fermée, la vanne (28) de décharge étant ouverte jusqu'à ce qu'il règne sensiblement une compensation de pression entre les deux chambres (12, 14) sous pression et il est prévu des vannes (16, 18, 20, 22) d'alimentation et de mise à l'atmosphère pour alimenter et mettre à l'atmosphère les deux chambres (12, 14) sous pression qui sont fermées pendant la durée d'ouverture de la vanne (28) de décharge et dans lequel il se produit une montée en pression ou une baisse de pression outrepassant la compensation de pression dans les deux chambres (12, 14) sous pression par ouverture ou fermeture des vannes (16, 18, 20, 22) d'alimentation en air et de mise à l'atmosphère.

2. Dispositif de freinage suivant la revendication 1, **caractérisé en ce que** le piston (6) de réglage est soumis à l'action d'un ressort en direction de la position de serrage.

3. Dispositif de freinage suivant la revendication 1 ou 2, **caractérisé en ce que** la vanne (28) de décharge est ouverte jusqu'à ce qu'une fraction d'une force de serrage ou de desserrage que l'on peut atteindre au maximum soit atteinte.
